# EUROPEAN PATENT APPLICATION

(11) **EP 4 454 525 A1**
(43) Date of publication of application: **30.10.2024**
(21) Application number: 23821863.0
(22) Date of filing: 12.07.2023
(51) Int. Cl.: A47J 37/06

(54) **DOOR ASSEMBLY AND COOKING APPLIANCE**

(30) Priority: 08.03.2023 CN 202310216121
(71) Applicant: Guangdong Midea Kitchen Appliances Manufacturing Co., Ltd., Foshan, Guangdong 528311 (CN)
(72) Inventor: LIU, Binbin, Foshan, Guangdong 528311 (CN); CHO, Jae Man, Foshan, Guangdong 528311 (CN); JOO, Modam, Foshan, Guangdong 528311 (CN); HUANG, Zhifei, Foshan, Guangdong 528311 (CN); LIU, Zhi, Foshan, Guangdong 528311 (CN); WANG, Wenbo, Foshan, Guangdong 528311 (CN); TIAN, Chensheng, Foshan, Guangdong 528311 (CN)
(74) Representative: RGTH
(86) International application number: PCT/CN2023/106933
(87) International publication number: WO 2024/183206

(57) **Abstract**

The present disclosure provides a door assembly and a cooking appliance, and the door assembly is used for a cooking appliance, and the door assembly comprises: a main body; multiple partition plates, located within the main body and connected to the main body sequentially along the direction away from the cooking cavity of the cooking appliance; and, multiple air ducts are enclosed between any two adjacent partition plates and between the inner wall of the main body close to the cooking cavity and an adjacent partition plate, one end of any air duct communicates with the outside and the other end communicates with the heat dissipation cavity of the cooking appliance, and the air ducts are configured to discharge the air flow in the heat dissipation cavity, to cool down of the door assembly. Therefore, firstly, heat dissipation to the door assembly is able to be conducted through the multiple air ducts, and this prevents damaging the door assembly due to the high temperature in the cooking cavity and prolongs the service life and reliability of the door assembly, and secondly, the temperature of the wall face of the door assembly facing the outside is able to be lowered effectively, which prevents burning the user due to the excessively high temperature of the outer wall of the door assembly and improves product safety.

## Description

### CROSS-REFERENCE TO RELATED APPLICATIONS

This disclosure claims priority to Chinese Patent Application No. 202310216121.9 filed with China National Intellectual Property Administration on March 8, 2023 and entitled "DOOR ASSEMBLY AND COOKING APPLIANCE", the entire contents of which are herein incorporated by reference.

### FIELD

The embodiments of the present disclosure relate to the field of household electrical equipment, and particularly, relates to a door assembly and a cooking appliance.

### BACKGROUND

Microwave steaming and baking integrated machines in the prior art usually do not have a self-cleaning function, however, when a microwave steaming and baking integrated machine having the self-cleaning function is conducting high temperature self-cleaning, the temperature in its cooking cavity is excessively high, and the oven door in the prior art usually cannot bear a high temperature of 450°C.

### SUMMARY

The present disclosure aims to solve at least one of the problems existing in the prior art or related art.

Therefore, the first purpose of the present disclosure is to provide a door assembly.

The second purpose of the present disclosure is to provide a cooking appliance.

In order to achieve at least one of the above purposes, according to the first aspect of the present disclosure, a door assembly for a cooking appliance is provided, and the door assembly comprises: a main body; multiple partition plates, located within the main body and connected to the main body sequentially along the direction away from the cooking cavity of the cooking appliance; and multiple air ducts are enclosed between any two adjacent partition plates and between the inner wall of the main body close to the cooking cavity and an adjacent partition plate, one end of any air duct communicates with the outside and the other end communicates with the heat dissipation cavity of the cooking appliance, and the air ducts are configured to discharge the air flow in the heat dissipation cavity, to cool down of the door assembly.

The door assembly provided in the present disclosure can be used for a cooking appliance, the cooking appliance comprises a box body, and door assembly is moveably connected to the box body and can move between different positions with respect to the box body. The box body comprises a cooking cavity, the cooking cavity is configured to accommodate food ingredients, and the cooking appliance can cook the food ingredients in the cooking cavity. When the door assembly moves between different positions, the door assembly can open or close the cooking cavity.

In a possible embodiment, the cooking appliance is a microwave steaming and baking integrated machine having a high temperature self-cleaning function, when the cooking appliance performs high temperature seal-cleaning to the cooking cavity, the temperature within the cooking cavity can reach 450°C, to carbonize the oil in the cooking cavity and then achieve the seal-cleaning function. A conventional door body cannot bear the high temperature of 450°C, firstly, the door body can be easily damaged due to the high temperature, and then a portion of the components in the door body fail, and secondly, since the door body cannot effectively insulate the high temperature in the cooking cavity, the temperature of the outer wall of the door body is too high, and then users can be easily burned.

In order to avoid the above problems, the present disclosure provides a door assembly suitable for a high temperature environment, and the door assembly comprises multiple air ducts, and the air ducts can dissipate heat for the door assembly, to cool down of the door assembly. The door assembly comprises a main body and multiple partition plates, the main body has a cavity structure therein, the multiple partition plates are located within the main body, the partition plates are configured to constitute air ducts for ventilation, all of the multiple partition plates are connected to the main body and the partition plates can keep fixed with respect to the main body, and the multiple partition plates are sequentially arranged along the direction away from the cooking cavity, therefore, multiple air ducts can be enclosed through the partition plates and the wall face of the main body.

In an embodiment, the air ducts are respectively enclosed between any two adjacent partition plates and between the inner wall of the main body close to the cooking cavity and an adjacent partition plate, and the main body has multiple air ducts therein. The cooking appliance using the door assembly further comprises a heat dissipation cavity, the heat dissipation cavity is provided with a heat dissipation device for dissipating the heat of the cooking appliance, and the heat dissipation device can form an air flow, and the effect of dissipating the heat of the cooking appliance can be achieved through discharging the air flow out of the cooking appliance. One end of any of the air duct communicates with the outside and the other end communicates with the heat dissipation cavity, and the air flow in the heat dissipation cavity can be discharged to the outside through the air duct in the door assembly. Therefore, firstly, heat dissipation can be conducted to the door assembly through the air duct, and this prevents damaging the door assembly due to the excessively high temperature in the door assembly, and secondly, through disposing the multiple partition plates, this effectively lowers the temperature of the wall face of the door assembly facing the outside, and prevents the door assembly from burning the user. Moreover, discharging the air flow in the heat dissipation cavity through the air ducts in the door assembly can further dissipate the heat in the heat dissipation cavity, and then has the function of lowering the temperature of the cooking appliance.

In a possible embodiment, the number of the partition plates is two, the air ducts are respectively enclosed between the two partition plates and between the partition plate close to the inner wall of the main body and the inner wall of the main body, and the door assembly has two air ducts therein, compared with a door body provided with a single air duct, through providing at least two air ducts in the door assembly, the present disclosure can improve the heat dissipation effect to the door assembly, and can insulate heat through the multiple partition plates, and avoid that the outer wall of the door assembly is too hot.

Through providing multiple partition plates in the main body, multiple air ducts can be formed through the multiple partition plates, and the air flow in the heat dissipation cavity of the cooking appliance is discharged to the outside through the air ducts; firstly, heat dissipation to the door assembly can be conducted through the multiple air ducts, and this prevents damaging the door assembly due to the high temperature in the cooking cavity and prolongs the service life and reliability of the door assembly, and secondly, the temperature of the wall face of the door assembly facing the outside can be lowered effectively, which prevents burning the user due to the excessively high temperature of the outer wall of the door assembly and improves product safety.

The above door assembly according to the present disclosure can further comprise the following distinguishing features.

In some embodiments, the main body comprises: a middle frame assembly; a mounting frame connected to the middle frame assembly, and the mounting frame is located at the side of the middle frame assembly away from the cooking cavity, and the multiple partition plates are respectively located at the two sides of the mounting frame.

In the embodiment, the structure of the main body is defined. The main body comprises the middle frame assembly and the mounting frame, and the mounting frame and the middle frame assembly are respectively configured to fix the multiple partition plates. And the mounting frame is located at the side of the middle frame assembly away from the cooking cavity and is connected to the middle frame assembly, and there is a gap between the mounting frame and the middle frame assembly. The mounting frame can be connected to the middle frame assembly through a screw, and can further be connected to the middle frame assembly through other connecting methods. Furthermore, at least a portion of the multiple partition plates are connected to the mounting frame, and at least a portion of the multiple partition plates are connected to the middle frame assembly, to achieve mounting and fixing the multiple partition plates.

Furthermore, the multiple partition plates are respectively located at the two sides of the mounting frame, and there is a gap between two adjacent partition plates, and an air duct is enclosed between two adjacent partition plates. The inner wall of the middle frame assembly constitutes the inner wall of the main body, and there is a gap between the partition plate adjacent to the inner wall of the middle frame assembly and the inner wall of the middle frame assembly, and the inner wall of the middle frame assembly and the partition plate enclose the air duct.

Through providing the middle frame assembly and the mounting frame in the main body, the multiple partition plates can be fixed through the middle frame assembly and the mounting frame; through providing the multiple partition plates at the two sides of the mounting frame respectively, there can be a gap between two adjacent partition plates, and then two adjacent partition plates can enclose an air duct.

In some embodiments, the multiple partition plates comprise: a first partition plate, located between the mounting frame and the middle frame assembly, and the first partition plate is connected to the middle frame assembly, and the first partition plate and the middle frame assembly define a first air duct of the multiple air ducts; and a second partition plate, located at the side of the mounting frame away from the middle frame assembly, and the second partition plate is connected to the mounting frame, and the second partition plate and the first partition plate define a second air duct of the multiple air ducts.

In the embodiment, the multiple partition plates and the multiple air ducts are defined. The multiple partition plates comprise the first partition plate and the second partition plate, and the first partition plate is located between the mounting frame and the middle frame assembly, and is connected to the middle frame assembly. The first partition plate can be connected to the middle frame assembly through a screw, and can further be connected to the middle frame assembly through other connecting methods. There is a gap between the first partition plate and the inner wall of the middle frame assembly, and the first partition plate and the inner wall of the middle frame assembly define the first air duct of the multiple air ducts. One end of the first air duct communicates with the heat dissipation cavity and the other end communicates with the outside, and the air flow in the heat dissipation cavity can be discharged to the outside through the first air duct, to cool down of the first partition plate and the middle frame assembly.

Furthermore, the multiple partition plates further comprise the second partition plate, and the second partition plate is located at the side of the mounting frame away from the middle frame assembly and is connected to the mounting frame. In an embodiment, a mounting groove is provided at the side of the mounting frame away from the middle frame assembly for mounting and fixing the second partition plate, the second partition plate can be inserted into the mounting frame, in addition, the second partition plate can further be connected to the mounting frame through other methods, as long as the second partition plate can be fixed with respect to the mounting frame and there is a gap between the second partition plate and the first partition plate. There is a gap between the first partition plate and the second partition plate, and the second air duct of the multiple air ducts is defined between the first partition plate and the second partition plate. One end of the second air duct communicates with the heat dissipation cavity and the other end communicates with the outside, and the air flow in the heat dissipation cavity can be discharged to the outside through the second air duct, to cool down of the first partition plate, the second partition plate and the mounting frame.

Through providing the first partition plate and the second partition plate in the door assembly, the first partition plate and the inner wall of the middle frame assembly enclose the first air duct, the second partition plate and the first partition plate enclose the second air duct, and the temperature of the middle frame assembly and the first partition plate can be lowered through the first air duct, and the temperature of the first partition plate and the second partition plate are lowered through the second air duct, to cool down of the door assembly.

In some embodiments, the door assembly further comprises a baffle connected to the side of the mounting frame facing the middle frame assembly, and the baffle is configured to support the first partition plate, the baffle is provided with multiple air outlets, the air outlets are located between the first partition plate and the second partition plate, and the second air duct communicates with the outside through the air outlets.

In the embodiment, the structure of the door assembly is further defined. To further fix the first partition plate, the present disclosure further provides the baffle in the door assembly for supporting the first partition plate. The baffle is connected to the side of the mounting frame facing the middle frame assembly and extends towards the direction of the middle frame assembly, the bottom wall of the first partition plate abuts on the baffle, the baffle can support the first partition plate, therefore, the first partition plate can be further fixed, and the stability of the first partition plate is further improved.

Furthermore, the baffle is provided with multiple air outlets, the multiple air outlets are located between the first partition plate and the second partition plate, that is, the multiple air outlets are located at the side of the first partition plate away from the middle frame assembly, the air outlets are located at the air discharging path of the second air duct, and the second air duct can communicate with the outside through the air outlets. When air is discharged through the second air duct, the air flow in the heat dissipation cavity flows along the second air duct, and can flow to the outside through the multiple air outlets in the baffle, to the air discharging function of the second air duct.

Furthermore, the baffle is further provided with multiple protrusions, the multiple protrusions are provided between the first partition plate and the air outlets, therefore, the first partition plate can be limited through the protrusions, and the first partition plate avoids the air outlets, and this prevents the first partition plate from shielding the air outlets and then affecting the air discharge of the second air duct.

Through providing the baffle on the mounting frame, the first partition plate can be supported through the baffle, and this further improves the stability of the first partition plate. Moreover, the air outlets are provided in the baffle, and the air outlets are provided between the first partition plate and the second partition plate, therefore the air flow in the second air duct can be discharged through the air outlets, the communication between the second air duct and the outside is achieved, then the air flow can be smoothly discharged through the second air duct, and the function of lowering the temperature of the door assembly is achieved.

In some embodiments, the baffle and the middle frame assembly enclose multiple air discharge grooves, the air discharge grooves are located between the first partition plate and the middle frame assembly, and the first air duct communicates with the outside through the air discharge grooves.

In the embodiment, the structure of the baffle is further defined. Multiple grooves are provided at the side of the baffle facing the middle frame assembly, the multiple grooves are respectively located in the two ends of the baffle, the middle frame assembly and the groove wall of the grooves in the baffle enclose the multiple air discharge grooves, the air discharge grooves are located between the first partition plate and the middle frame assembly and located at the air discharging path of the first air duct, and the first air duct can communicate with the outside through the air discharge grooves, the air flow in the first air duct can be discharged to the outside through air discharge grooves, and the normal air discharging function of the first air duct is achieved.

Through enclosing multiple air discharge grooves by the baffle and the middle frame assembly, the air discharge grooves are provided between the first partition plate and the middle frame assembly, and the first air duct can communicate with the outside through the air discharge grooves, and then the normal air discharge of the first air duct is achieved, and then the first air duct can have the function of lowering the temperature of the door assembly.

In some embodiments, the mounting frame comprises a mounting groove, with the second partition plate inserted into the mounting groove.

In the embodiment, the structure of the mounting frame is defined. To mount the second partition plate on the mounting frame, the present disclosure provides the mounting groove in the mounting frame for mounting the second partition plate, the mounting groove is located at the side of the mounting frame away from the middle frame assembly, the notch of the mounting groove faces above the mounting frame, with the second partition plate inserted into the mounting groove, to achieve mounting and fixing the second partition plate.

In an embodiment, the mounting groove is located in the area of the mounting frame close to the lower part of the mounting frame. In a further embodiment, multiple hooks are provided at the side of the mounting frame away from the middle frame assembly, any hook extends along the direction away from the middle frame assembly and bends towards the direction above the mounting frame, there is a certain gap between the bending portion of any hook and the mounting frame, and the bending portions of the multiple hooks and the mounting frame jointly form the mounting groove. The second partition plate can be inserted into the mounting groove formed by the multiple hooks, to mount and fix the second partition plate.

Through providing the mounting groove in the mounting frame, the second partition plate can be mounted and fixed through inserting the second partition plate in the mounting groove.

In some embodiments, the door assembly further comprises at least one limiting member connected to the mounting frame, with the limiting member located at the side of the mounting frame away from the middle frame assembly, and at least a portion of the second partition plate is located between the limiting member and the mounting frame, and the limiting member is configured to limit the second partition plate.

In the embodiment, the structure of the door assembly is further defined. To further limit the second partition plate, the present disclosure further provides the limiting member for limiting the second partition plate, the number of the limiting member can be one, while there can further be multiple limiting members, and the limiting member is connected to the side of the mounting frame away from the middle frame assembly. The limiting member is provided in the area of the mounting frame close to the upper part of the mounting frame, and the end of the second partition plate away from the mounting groove can be limited through the limiting member, thus, the upper end and the lower end of the second partition plate can be respectively limited through the limiting member and the mounting groove, and the second partition plate can be mounted on the mounting frame stably.

Furthermore, the structure of the limiting member is defined. The limiting member is connected to the side of the mounting frame away from the middle frame assembly, the limiting member extends along the direction away from the middle frame assembly and bends towards one side of the mounting groove, there is a gap between the bending of the limiting member and the mounting frame, and at least a portion of the second partition plate is located between the bending of the limiting member and the mounting frame, therefore, the second partition plate can be limited through the bending of the limiting member.

In a possible embodiment, the number of the limiting members is two, and the two limiting members are respectively close to the two sides of the second partition plate.

Through providing at least one limiting member on the mounting frame, the second partition plate can be further limited through the limiting member, and the second partition plate can be stably fixed on the mounting frame, and product stability and reliability are improved.

In some embodiments, the main body further comprises an outer door plate connected to the mounting frame, the outer door plate is provided at the side of the second partition plate away from the first partition plate, and a decoration plate is provided at the side of the outer door plate facing the outside.

In the embodiment, the structure of the main body is further defined. The main body further comprises the outer door plate, and the outer door plate is provided facing the outside, that is, the outer door plate is located at the side facing the user. The outer door plate is connected to the mounting frame, the side of the outer door plate facing the mounting frame is provided with multiple connecting grooves, the multiple connecting grooves are respectively close to the two sides of the outer door plate, the mounting frame is provided with connecting protrusions matching the connecting grooves, and the connecting protrusions are inserted into the notches of corresponding connecting grooves, and the outer door plate can be hooked on the mounting frame, and the connection between the mounting frame and the outer door plate is achieved.

Furthermore, to further mount and fix the outer door plate, the outer door plate can further be connected to the middle frame assembly, the outer door plate can be connected to the middle frame assembly through a screw. Therefore, the outer door plate can be mounted and fixed respectively through the cooperation between the connecting grooves and the connecting protrusions and the screw, and the outer door plate keeps stable with respect to the mounting frame and the middle frame assembly.

Furthermore, in order to keep the beauty of the door assembly, the present disclosure further provides the decoration plate at the side of the outer door plate facing the outside, to improve the beauty degree of the door assembly. Furthermore, the decoration plate further has a heat insulating function, and the amount of the heat dissipated from the door assembly to the outside can be further prevented by the decoration plate. In a possible embodiment, the decoration plate is made of a glass which can bear high temperature.

In some embodiments, the middle frame assembly comprises: a middle frame; and a heat insulating plate mounted on the middle frame; and the first partition plate, the second partition plate, the heat insulating plate and the decoration plate are made of a high temperature resistant glass.

In the embodiment, the structure of the middle frame assembly is further defined. The middle frame assembly comprises the middle frame and the heat insulating plate, the heat insulating plate is mounted on the middle frame, the heat insulating plate constitutes the inner wall of the middle frame assembly, that is, the heat insulating plate constitutes at least a portion of the inner wall of the main body, and the first partition plate and the heat insulating plate define the first air duct.

Furthermore, the first partition plate, the second partition plate, the heat insulating plate and the decoration plate are all made of a high temperature resistant glass, and the high temperature resistant glass can bear a high temperature of 450°C. In a possible embodiment, the first partition plate, the second partition plate, the heat insulating plate and the decoration plate are made of a Borosilicate glass that can bear high temperature. That is, the door assembly provided in the present disclosure comprises four layers of heat insulating members made of a high temperature resistant glass, that is, the heat insulating plate, the first partition plate, the second partition plate and the decoration plate, compared with a traditional door body, the door assembly provided in the present disclosure has better heat insulating performance.

In some embodiments, the door assembly further comprises an upper cover connected to the main body, and the upper cover is provided with multiple air inlets, and the air inlets communicate with the multiple air ducts.

In the embodiment, the structure of the door assembly is further defined. The door assembly further comprises the upper cover, the upper cover is connected to the main body, and the upper cover is connected to the middle frame assembly, the upper cover is provided with multiple air inlets, in the case that the upper cover is mounted on the main body, the air inlets communicate with the multiple air ducts, and the air inlets are used for admitting air. The air inlets are arranged facing the air outlets of the heat dissipation cavity, the air flow discharged out of the heat dissipation cavity flows into the first air duct and the second air duct through the air inlets and then discharged through the first air duct and the second air duct, to achieve the effect of lowering the temperature of the door assembly.

In some embodiments, the main body is provided with an air intake cavity, and one end of the air intake cavity communicates with the multiple air inlets and the other end communicates with the multiple air ducts.

In the embodiment, the structure of the main body is further defined. The main body further comprises the air intake cavity, and the air intake cavity is located between the first air duct, the second air duct and the air inlets, one end of the air intake cavity communicates with the multiple air inlets and the other end communicates with the multiple air ducts, therefore, the air flow can be first buffered in the air intake cavity after entering the door assembly through the air inlets, then is divided into the first air duct and the second air duct, and the air flow can flow more stably.

In some embodiments, the door assembly further comprises: a door seal connected to the middle frame assembly, and the door seal is located at the side of the middle frame assembly facing the cooking cavity, and is provided with an avoiding opening; and a sealing member provided at the avoiding opening and attached to the inner wall of the avoiding opening, and at least a portion of the middle frame assembly extends into the avoiding opening, and at least a portion of the sealing member is provided between the inner wall of the avoiding opening and the middle frame assembly.

In the embodiment, the structure of the door assembly is further defined, the door assembly further comprises the door seal, the door seal is configured to cooperate with the box body of the cooking appliance, when the door assembly closes the cooking cavity, the door seal is closely attached to the box body of the cooking appliance, and the door assembly can seal the cooking cavity tightly. The door seal is connected to the middle frame assembly, the door seal can be connected to the middle frame assembly through a screw, and can further be connected to the middle frame assembly through other connecting methods. The door seal is located at the side of the middle frame assembly facing the cooking cavity.

Furthermore, the door assembly is further provided with the avoiding opening, the portion of the middle frame assembly provided with the heat insulating plate extends into the avoiding opening, when the door assembly closes the cooking cavity, and the heat insulating plate faces the cooking cavity to insulate the high temperature in the cooking cavity.

Furthermore, the door assembly further comprises the sealing member, the sealing member is configured to be a sealing ring structure having the same shape with the avoiding opening, the sealing member is provided at the avoiding opening and attached to the inner wall of the avoiding opening, at least a portion of the sealing member is located between the inner wall of the avoiding opening and the middle frame assembly extending into the avoiding opening, the sealing member is pressed by the middle frame assembly and the inner wall of the avoiding opening, to achieve a sealing function, prevent the moisture in the cooking cavity from penetrating into the door assembly via the gap between the middle frame assembly and the inner wall of the avoiding opening, and thus achieve a certain protecting function to the door assembly.

In some embodiments, the door assembly further comprises multiple connecting members which are respectively connected to the two sides of the mounting frame, and the connecting members are configured to connect the door assembly to the box body of the cooking appliance.

In the embodiment, the structure of the door assembly is further defined. In order that the door assembly can be mounted on the box body of the cooking appliance, the present disclosure further provides multiple connecting members in the door assembly, and the connecting members are configured to connect the door assembly to the box body of the cooking appliance. The multiple connecting members are respectively connected to the two sides of the mounting frame, the connecting members are connected to the mounting frame through a screw, at least a portion of the connecting members extend out of the door assembly and are inserted into the connecting holes of the cooking appliance matching the connecting members, and the door assembly can be connected to the box body of the cooking appliance.

In some embodiments, each of the connecting members comprises: a first connecting rod connected to the mounting frame; a second connecting rod connected to the box body, and the first connecting rod can rotate with respect to the second connecting rod, and so that the door assembly can rotate with respect to the box body.

In the embodiment, the structure of the connecting member is defined. Each of the connecting members comprises the first connecting rod and the second connecting rod, and the first connecting rod is connected to the mounting frame, the second connecting rod is connected to the box body of the cooking appliance, and the first connecting rod can rotate with respect to the second connecting rod, i.e., the first connecting rod is hinged to the second connecting rod. In the case that the user needs to open the door assembly, the door assembly can be pulled by the user to rotate towards the direction away from the box body of the cooking appliance, at this moment, the first connecting rod rotates with respect to the second connecting rod, and the door assembly can open the cooking cavity, when the user needs to close the cooking cavity, the door assembly is pushed by the user to rotate towards the direction facing the box body of the cooking appliance, at this moment, the first connecting rod rotates with respect to the second connecting rod, and the door assembly can close the cooking cavity.

The second aspect of the present disclosure further provides a cooking appliance, including: the door assembly provided in the first aspect of the present disclosure; a box body including a cooking cavity, and the door assembly is used for opening or closing the cooking cavity; a heat dissipation cavity communicating with the air inlets of the door assembly; a heat dissipating device provided in the heat dissipation cavity, and the heat dissipating device can form an air flow for heat dissipation, and discharge the air flow into the air ducts of the door assembly through the air inlets.

The cooking appliance provided in the present disclosure comprises the box body and the door assembly, the box body comprises the cooking cavity, and the door assembly is connected to the box body and can move between different positions with respect to the box body, and the door assembly can open or close the cooking cavity.

Furthermore, the cooking appliance further comprises the heat dissipation cavity, and the heat dissipation cavity is provided with the heat dissipating device therein, and the heat dissipating device comprises a fan. The heat dissipating device can form an air flow for heat dissipation when it operates, the heat dissipation cavity communicates with the air inlets of the door assembly, the air flow enters the door assembly through the air inlets, the door assembly comprises multiple air ducts communicating with the outside, and the air flow moves along the air ducts and is discharged to the outside, to achieve the function of lowering the temperature of the door assembly.

The cooking appliance provided in the second aspect of the present disclosure comprises the door assembly provided in the first aspect of the present disclosure, and thus has all the advantageous effects of the door assembly.

The cooking appliance can be an oven or a microwave steaming and baking integrated machine.

The additional aspects and advantages of the present disclosure will be obvious in the following description, or can be understood through the practice of the present disclosure.

### BRIEF DESCRIPTION OF THE DRAWINGS

The above and/or additional aspects and advantages of the present disclosure will be obvious and understood easily from the description of the embodiments in combination with the accompanying drawings:
FIG. 1 is a first schematic view of the structure of a door assembly according to an embodiment of the present disclosure;
FIG. 2 is a second schematic view of the structure of a door assembly according to an embodiment of the present disclosure; and
FIG. 3 is an exploded view of a door assembly according to an embodiment of the present disclosure.

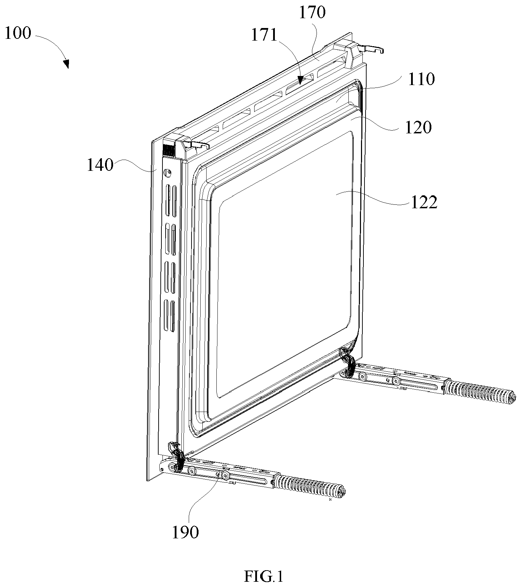

The corresponding relations between the reference signs and the component names in FIG. 1 to FIG. 3 are as follow:

100 door assembly; 110 main body; 120 middle frame assembly; 121 middle frame; 122 heat insulating plate; 123 air intake cavity; 130 mounting frame; 131 baffle; 132 air outlet; 133 air discharge groove; 134 limiting member; 140 outer door plate; 141 decoration plate; 150 partition plate; 151 first partition plate; 152 second partition plate; 160 air duct; 161 first air duct; 162 second air duct; 170 upper cover; 171 air inlet; 180 door seal; 181 avoiding opening; 182 sealing member; 190 connecting member; 191 first connecting rod; 192 second connecting rod.

### DETAILED DESCRIPTION OF THE DISCLOSURE

To more clearly understand the above purposes, features and advantages of the present disclosure, the present disclosure will be further detailed hereinafter in combination with the accompanying drawings and embodiments. It should be indicated that in the case of no conflict, the embodiments and the features in the embodiments of the present disclosure can be combined with each other.

Many details are illustrated in the following description for the convenience of a thorough understanding to the present disclosure, but the present disclosure can further be implemented using other embodiments other than these described herein. Therefore, the protection scope of the present disclosure is not limited to the embodiments disclosed in the following text.

A door assembly 100 and a cooking appliance according to some embodiments of the present disclosure are described in the following by referring to FIG. 1 to FIG. 3.

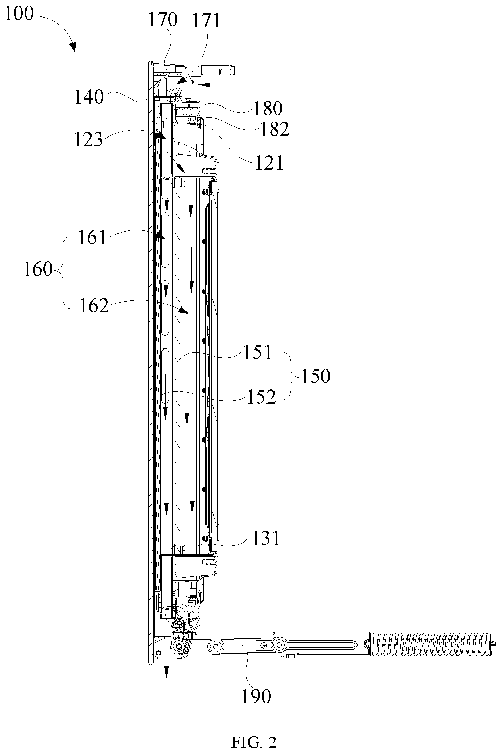

In an embodiment of the present application, as shown in FIG. 1 and FIG. 2, the first aspect of the present disclosure provides a door assembly 100 for a cooking appliance, and the door assembly 100 comprises: a main body 110; multiple partition plates 150, located within the main body 110 and connected to the main body 110 sequentially along the direction away from the cooking cavity of the cooking appliance; and multiple air ducts 160 are enclosed between any two adjacent partition plates 150 and between the inner wall of the main body 110 close to the cooking cavity and an adjacent partition plate 150, one end of any air duct 160 communicates with the outside and the other end communicates with the heat dissipation cavity of the cooking appliance, and the air ducts 160 are configured to discharge the air flow in the heat dissipation cavity, to cool down of the door assembly 100.

The door assembly 100 provided in the present disclosure can be used for a cooking appliance, the cooking appliance comprises a box body, and door assembly 100 is movably connected to the box body and can move between different positions with respect to the box body. The box body comprises a cooking cavity, the cooking cavity is configured to accommodate food ingredients, and the cooking appliance can cook the food ingredients in the cooking cavity. When the door assembly 100 moves between different positions, the door assembly 100 can open or close the cooking cavity.

In a possible embodiment, the cooking appliance is a microwave steaming and baking integrated machine having a high temperature self-cleaning function, when the cooking appliance performs high temperature seal-cleaning to the cooking cavity, the temperature within the cooking cavity can reach 450°C, to carbonize the oil in the cooking cavity and then achieve the seal-cleaning function. A conventional door body cannot bear the high temperature of 450°C, firstly, the door body can be easily damaged due to the high temperature, and then a portion of the components in the door body fail, and secondly, since the door body cannot effectively insulate the high temperature in the cooking cavity, the temperature of the outer wall of the door body is too high, and then users can be easily burned.

In order to avoid the above problems, the present disclosure provides a door assembly 100 suitable for a high temperature environment, and the door assembly 100 comprises multiple air ducts 160, and the air ducts 160 can dissipate heat for the door assembly 100, to cool down of the door assembly 100. The door assembly 100 comprises a main body 110 and multiple partition plates 150, the main body 110 has a cavity structure therein, the multiple partition plates 150 are located within the main body 110, the partition plates 150 are configured to constitute air ducts 160 for ventilation, all of the multiple partition plates 150 are connected to the main body 110 and the partition plates 150 can keep fixed with respect to the main body 110, and the multiple partition plates 150 are sequentially arranged along the direction away from the cooking cavity, therefore, multiple air ducts 160 can be enclosed through the partition plates 150 and the wall face of the main body 110.

In an embodiment, the air ducts 160 are respectively enclosed between any two adjacent partition plates 150 and between the inner wall of the main body 110 close to the cooking cavity and an adjacent partition plate 150, and the main body 110 has multiple air ducts 160 therein. The cooking appliance using the door assembly 100 further comprises a heat dissipation cavity, the heat dissipation cavity is provided with a heat dissipation device for dissipating the heat of the cooking appliance, and the heat dissipation device can form an air flow, and the effect of dissipating the heat of the cooking appliance can be achieved through discharging the air flow out of the cooking appliance. One end of any of the air duct 160 communicates with the outside and the other end communicates with the heat dissipation cavity, and the air flow in the heat dissipation cavity can be discharged to the outside through the air duct 160 in the door assembly 100. Therefore, firstly, heat dissipation can be conducted to the door assembly 100 through the air duct 160, and this prevents damaging the door assembly 100 due to the excessively high temperature in the door assembly 100, and secondly, through disposing the multiple partition plates 150, this effectively lowers the temperature of the wall face of the door assembly 100 facing the outside, and prevents the door assembly 100 from burning the user. Moreover, discharging the air flow in the heat dissipation cavity through the air ducts 160 in the door assembly 100 can further dissipate the heat in the heat dissipation cavity, and then has the function of lowering the temperature of the cooking appliance.

In a possible embodiment, the number of the partition plates 150 is two, the air ducts 160 are respectively enclosed between the two partition plates 150 and between the partition plate 150 close to the inner wall of the main body 110 and the inner wall of the main body 110, and the door assembly 100 has two air ducts 160 therein, compared with a door body provided with a single air duct 160, through providing at least two air ducts 160 in the door assembly 100, the present disclosure can improve the heat dissipation effect to the door assembly 100, and can insulate heat through the multiple partition plates 150, and avoid that the outer wall of the door assembly 100 is too hot.

Through providing multiple partition plates 150 in the main body 110, multiple air ducts 160 can be formed through the multiple partition plates 150, and the air flow in the heat dissipation cavity of the cooking appliance is discharged to the outside through the air ducts 160; firstly, heat dissipation to the door assembly 100 can be conducted through the multiple air ducts 160, and this prevents damaging the door assembly 100 due to the high temperature in the cooking cavity and prolongs the service life and reliability of the door assembly 100, and secondly, the temperature of the wall face of the door assembly 100 facing the outside can be lowered effectively, which prevents burning the user due to the excessively high temperature of the outer wall of the door assembly 100 and improves product safety.

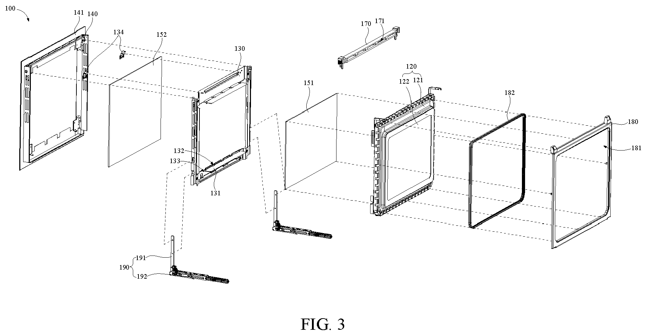

In some embodiments, as shown in FIG. 2 and FIG. 3, the main body 110 comprises: a middle frame assembly 120; a mounting frame 130 connected to the middle frame assembly 120, and the mounting frame 130 is located at the side of the middle frame assembly 120 away from the cooking cavity, and the multiple partition plates 150 are respectively located at the two sides of the mounting frame 130.

In the embodiment, the structure of the main body 110 is defined. The main body 110 comprises the middle frame assembly 120 and the mounting frame130, and the mounting frame 130 and the middle frame assembly 120 are respectively configured to fix the multiple partition plates 150. And the mounting frame 130 is located at the side of the middle frame assembly 120 away from the cooking cavity and is connected to the middle frame assembly 120, and there is a gap between the mounting frame 130 and the middle frame assembly 120.The mounting frame 130 can be connected to the middle frame assembly 120 through a screw, and can further be connected to the middle frame assembly 120 through other connecting methods. Furthermore, at least a portion of the multiple partition plates 150 are connected to the mounting frame 130, and at least a portion of the multiple partition plates 150 are connected to the middle frame assembly 120, to achieve mounting and fixing the multiple partition plates 150.

Furthermore, the multiple partition plates 150 are respectively located at the two sides of the mounting frame 130, and there is a gap between two adjacent partition plates 150, and an air duct 160 is enclosed between two adjacent partition plates 150. The inner wall of the middle frame assembly 120 constitutes the inner wall of the main body 110, and there is a gap between the partition plate 150 adjacent to the inner wall of the middle frame assembly 120 and the inner wall of the middle frame assembly 120, and the inner wall of the middle frame assembly 120 and the partition plate 150 enclose the air duct 160.

Through providing the middle frame assembly 120 and the mounting frame 130 in the main body 110, the multiple partition plates 150 can be fixed through the middle frame assembly 120 and the mounting frame 130; through providing the multiple partition plates 150 at the two sides of the mounting frame 130 respectively, there can be a gap between two adjacent partition plates 150, and then two adjacent partition plates 150 can enclose an air duct 160.

In some embodiments, as shown in Fig 2 and FIG. 3, the multiple partition plates 150 comprise: a first partition plate 151, located between the mounting frame 130 and the middle frame assembly 120, and the first partition plate 151 is connected to the middle frame assembly 120, and the first partition plate 151 and the middle frame assembly 120 define a first air duct 161 of the multiple air ducts 160; and a second partition plate 152, located at the side of the mounting frame 130 away from the middle frame assembly 120, and the second partition plate 152 is connected to the mounting frame 130, and the second partition plate 152 and the first partition plate 151 define a second air duct 162 of the multiple air ducts 160.

In the embodiment, the multiple partition plates 150 and the multiple air ducts 160 are defined. The multiple partition plates 150 comprise the first partition plate 150 and the second partition plate 152, and the first partition plate 151 is located between the mounting frame 130 and the middle frame assembly 120, and is connected to the middle frame assembly 120.The first partition plate 151 can be connected to the middle frame assembly 120 through a screw, and can further be connected to the middle frame assembly 120 through other connecting methods. There is a gap between the first partition plate 151 and the inner wall of the middle frame assembly 120, and the first partition plate 151 and the inner wall of the middle frame assembly 120 define the first air duct 161 of the multiple air ducts 160. One end of the first air duct 161 communicates with the heat dissipation cavity and the other end communicates with the outside, and as shown in FIG. 2, the direction of the arrows is the flow direction of the air flow, and the air flow in the heat dissipation cavity can be discharged to the outside through the first air duct 161, to cool down of the first partition plate 151 and the middle frame assembly 120.

Furthermore, the multiple partition plates 150 further comprise the second partition plate 152, and the second partition plate 152 is located at the side of the mounting frame 130 away from the middle frame assembly 120 and is connected to the mounting frame 130.A mounting groove is provided at the side of the mounting frame 130 away from the middle frame assembly 120 for mounting and fixing the second partition plate 152, the second partition plate 152 can be inserted into the mounting frame, in addition, the second partition plate 152 can further be connected to the mounting frame 130 through other methods, as long as the second partition plate 152 can be fixed with respect to the mounting frame 130 and there is a gap between the second partition plate 152 and the first partition plate 151. There is a gap between the first partition plate 151 and the second partition plate 152, and the second air duct 162 of the multiple air ducts 160 is defined between the first partition plate 151 and the second partition plate 152. One end of the second air duct 162 communicates with the heat dissipation cavity and the other end communicates with the outside, and as shown in FIG. 2, the direction of the arrows is the flow direction of the air flow, and the air flow in the heat dissipation cavity can be discharged to the outside through the second air duct 162, to cool down of the first partition plate 151, the second partition plate 152 and the mounting frame 130.

Through providing the first partition plate 151 and the second partition plate 152 in the door assembly 100, the first partition plate 151 and the inner wall of the middle frame assembly 120 enclose the first air duct 161, the second partition plate 152 and the first partition plate 151 enclose the second air duct 162, and the temperature of the middle frame assembly 120 and the first partition plate 151 can be lowered through the first air duct 161, and the temperature of the first partition plate 151 and the second partition plate 152 are lowered through the second air duct 162, to cool down of the door assembly 100.

In some embodiments, as shown in FIG. 2 and FIG. 3, the door assembly 100 further comprises a baffle 131 connected to the side of the mounting frame 130 facing the middle frame assembly 120, and the baffle 131 is configured to support the first partition plate 151, the baffle 131 is provided with multiple air outlets 132, the air outlets 132 are located between the first partition plate 151 and the second partition plate 152, and the second air duct 162 communicates with the outside through the air outlets 132.

In the embodiment, the structure of the door assembly 100 is further defined. To further fix the first partition plate 151, the present disclosure further provides the baffle 131 in the door assembly 100 for supporting the first partition plate 151.The baffle 131 is connected to the side of the mounting frame 130 facing the middle frame assembly 120 and extends towards the direction of the middle frame assembly 120, the bottom wall of the first partition plate 151 abuts on the baffle 131, the baffle 131 can support the first partition plate 151, therefore, the first partition plate 151 can be further fixed, and the stability of the first partition plate 151 is further improved.

Furthermore, the baffle 131 is provided with multiple air outlets 132, the multiple air outlets 132 are located between the first partition plate 151 and the second partition plate 152, that is, the multiple air outlets 132 are located at the side of the first partition plate 152 away from the middle frame assembly 120, the air outlets 132 are located at the air discharging path of the second air duct 162, and the second air duct 162 can communicate with the outside through the air outlets 132. When air is discharged through the second air duct 162, the air flow in the heat dissipation cavity flows along the second air duct 162, and can flow to the outside through the multiple air outlets 132 in the baffle 131, to achieve the air discharging function of the second air duct 162.

Furthermore, the baffle 131 is further provided with multiple protrusions, the multiple protrusions are provided between the first partition plate 151 and the air outlets 132, therefore, the first partition plate 151 can be limited through the protrusions, and the first partition plate 151 avoids the air outlets 132, and this prevents the first partition plate 151 from shielding the air outlets 132 and then affecting the air discharge of the second air duct 162.

Through providing the baffle 131 on the mounting frame 130, the first partition plate 151 can be supported through the baffle 131, and this further improves the stability of the first partition plate 151. Moreover, the air outlets 132 are provided in the baffle 131, and the air outlets 132 are provided between the first partition plate 151 and the second partition plate 152, therefore the air flow in the second air duct 162 can be discharged through the air outlets 132, the communication between the second air duct 162 and the outside is achieved, then the air flow can be smoothly discharged through the second air duct 162, and the function of lowering the temperature of the door assembly 100 is achieved.

In some embodiments, as shown in FIG. 3, the baffle 131 and the middle frame assembly 120 enclose multiple air discharge grooves 133, the air discharge grooves 133 are located between the first partition plate 151 and the middle frame assembly 120, and the first air duct 161 communicates with the outside through the air discharge grooves 133.

In the embodiment, the structure of the baffle 131 is further defined. Multiple grooves are provided at the side of the baffle 131 facing the middle frame assembly 120, the multiple grooves are respectively located in the two ends of the baffle 131, the middle frame assembly 120 and the groove wall of the grooves in the baffle 131 enclose the multiple air discharge grooves 133, the air discharge grooves 133 are located between the first partition plate 151 and the middle frame assembly 120 and located at the air discharging path of the first air duct 161, and the first air duct 161 can communicate with the outside through the air discharge grooves 133, the air flow in the first air duct 161 can be discharged to the outside through air discharge grooves 133, and the normal air discharging function of the first air duct 161 is achieved.

Through enclosing multiple air discharge grooves 133 by the baffle 131 and the middle frame assembly 120, the air discharge grooves 133 are provided between the first partition plate 151 and the middle frame assembly 120, and the first air duct 161 can communicate with the outside through the air discharge grooves 133, and then the normal air discharge of the first air duct 160 is achieved, and then the first air duct 161 can have the function of lowering the temperature of the door assembly 100.

In some embodiments, the mounting frame 130 comprises a mounting groove, and the second partition plate 152 is inserted into the mounting groove.

In the embodiment, the structure of the mounting frame 130 is defined. To mount the second partition plate 152 on the mounting frame 130, the present disclosure provides the mounting groove in the mounting frame 130 for mounting the second partition plate 152, the mounting groove is located at the side of the mounting frame 130 away from the middle frame assembly 120, the notch of the mounting groove faces above the mounting frame 130, and the second partition plate 152 is inserted into the mounting groove, to achieve mounting and fixing the second partition plate 152.

In an embodiment, the mounting groove is located in the area of the mounting frame 130 close to the lower part of the mounting frame 130. In a further embodiment, multiple hooks are provided at the side of the mounting frame 130 away from the middle frame assembly 120, any hook extends along the direction away from the middle frame assembly 120 and bends towards the direction above the mounting frame 130, there is a certain gap between the bending portion of any hook and the mounting frame 130, and the bending portions of the multiple hooks and the mounting frame 130 jointly form the mounting groove. The second partition plate 152 can be inserted into the mounting groove formed by the multiple hooks, to mount and fix the second partition plate 152.

Through providing the mounting groove in the mounting frame 130, the second partition plate 152 can be mounted and fixed through inserting the second partition plate 152 in the mounting groove.

In some embodiments, as shown in FIG. 3, the door assembly 100 further comprises at least one limiting member 134 connected to the mounting frame 130, the limiting member 134 is located at the side of the mounting frame 130 away from the middle frame assembly 120, at least a portion of the second partition plate 152 is located between the limiting member 134 and the mounting frame 130, and the limiting member 134 is configured to limit the second partition plate 152.

In the embodiment, the structure of the door assembly 100 is further defined. To further limit the second partition plate 152, the present disclosure further provides the limiting member 134 for limiting the second partition plate 152, the number of the limiting member 134 can be one, while there can further be multiple limiting members, and the limiting member 134 is connected to the side of the mounting frame 130 away from the middle frame assembly 120. The limiting member 134 is provided in the area of the mounting frame 130 close to the upper part of the mounting frame 130, and the end of the second partition plate 152 away from the mounting groove can be limited through the limiting member 134, thus, the upper end and the lower end of the second partition plate 152 can be respectively limited through the limiting member 134 and the mounting groove, and the second partition plate 152 can be mounted on the mounting frame 130 stably.

Furthermore, the structure of the limiting member 134 is defined. The limiting member 134 is connected to the side of the mounting frame 130 away from the middle frame assembly 120, the limiting member 134 extends along the direction away from the middle frame assembly 120 and bends towards one side of the mounting groove, there is a gap between the bending of the limiting member 134 and the mounting frame 130, and at least a portion of the second partition plate 152 is located between the bending of the limiting member 134 and the mounting frame 130, therefore, the second partition plate 152 can be limited through the bending of the limiting member 134.

In a possible embodiment, the number of the limiting members 134 is two, and the two limiting members 134 are respectively close to the two sides of the second partition plate 152.

Through providing at least one limiting member 134 on the mounting frame 130, the second partition plate 152 can be further limited through the limiting member 134, and the second partition plate 152 can be stably fixed on the mounting frame 130, and product stability and reliability are improved.

In some embodiments, as shown in FIG. 1, FIG. 2 and FIG. 3, the main body 110 further comprises an outer door plate 140 connected to the mounting frame 130, the outer door plate 140 is provided at the side of the second partition plate 152 away from the first partition plate 151, and a decoration plate 141 is provided at the side of the outer door plate 140 facing the outside.

In the embodiment, the structure of the main body 110 is further defined. The main body 110 further comprises the outer door plate 140, and the outer door plate 140 is provided facing the outside, that is, the outer door plate 140 is located at the side facing the user. The outer door plate 140 is connected to the mounting frame 130, the side of the outer door plate 140 facing the mounting frame 130 is provided with multiple connecting grooves, the multiple connecting grooves are respectively close to the two sides of the outer door plate 140, the mounting frame 130 is provided with connecting protrusions matching the connecting grooves, and the connecting protrusions are inserted into the notches of corresponding connecting grooves, and the outer door plate 140 can be hooked on the mounting frame 130, and the connection between the mounting frame 130 and the outer door plate 140 is achieved.

Furthermore, to further mount and fix the outer door plate 140, the outer door plate 140 can further be connected to the middle frame assembly 120, the outer door plate 140 can be connected to the middle frame assembly 120 through a screw. Therefore, the outer door plate 140 can be mounted and fixed respectively through the cooperation between the connecting grooves and the connecting protrusions and the screw, and the outer door plate 140 keeps stable with respect to the mounting frame 130 and the middle frame assembly 120.

Furthermore, in order to keep the beauty of the door assembly 100, the present disclosure further provides the decoration plate 141 at the side of the outer door plate 140 facing the outside, to improve the beauty degree of the door assembly 100. Furthermore, the decoration plate 141 further has a heat insulating function, and the amount of the heat dissipated from the door assembly 100 to the outside can be further prevented by the decoration plate 141. In a possible embodiment, the decoration plate 141 is made of a glass which can bear high temperature.

In some embodiments, as shown in FIG. 1 and FIG. 3, the middle frame assembly 120 comprises: a middle frame 121; and a heat insulating plate 122 mounted on the middle frame 121; and the first partition plate 151, the second partition plate 152, the heat insulating plate 122 and the decoration plate 141 are made of a high temperature resistant glass.

In the embodiment, the structure of the middle frame assembly 120 is further defined. The middle frame assembly 120 comprises the middle frame 121 and the heat insulating plate 122, the heat insulating plate 122 is mounted on the middle frame 121, the heat insulating plate 122 constitutes the inner wall of the middle frame assembly 120, that is, the heat insulating plate 122 constitutes at least a portion of the inner wall of the main body 110, and the first partition plate 151 and the heat insulating plate 122 define the first air duct 161.

Furthermore, the first partition plate 151, the second partition plate 152, the heat insulating plate 122 and the decoration plate 141 are all made of a high temperature resistant glass, and the high temperature resistant glass can bear a high temperature of 450°C. In a possible embodiment, the first partition plate 151, the second partition plate 152, the heat insulating plate 122 and the decoration plate 141 are made of a Borosilicate glass that can bear high temperature. That is, the door assembly 100 provided in the present disclosure comprises four layers of heat insulating members made of a high temperature resistant glass, that is, the heat insulating plate 122, the first partition plate 151, the second partition plate 152 and the decoration plate 141, compared with a traditional door body, the door assembly 100 provided in the present disclosure has better heat insulating performance.

In some embodiments, as shown in FIG. 1, FIG. 2 and FIG. 3, the door assembly 100 further comprises an upper cover 170 connected to the main body 110, and the upper cover 170 is provided with multiple air inlets 171, and the air inlets 171 communicate with the multiple air ducts 160.

In the embodiment, the structure of the door assembly 100 is further defined. The door assembly 100 further comprises the upper cover 170, the upper cover 170 is connected to the main body 110, and the upper cover 170 is connected to the middle frame assembly 120, the upper cover 170 is provided with multiple air inlets 171, in the case that the upper cover 170 is mounted on the main body 110, the air inlets 171 communicate with the multiple air ducts 160, and the air inlets 171 are used for admitting air. The air inlets 171 are arranged facing the air outlets 132 of the heat dissipation cavity, the air flow discharged out of the heat dissipation cavity flows into the first air duct 161 and the second air duct 162 through the air inlets 171 and then discharged through the first air duct 161 and the second air duct 162, to achieve the effect of lowering the temperature of the door assembly 100.

In some embodiments, as shown in FIG. 2, the main body 110 is provided with an air intake cavity 123, and one end of the air intake cavity 123 communicates with the multiple air inlets 171 and the other end communicates with the multiple air ducts 160.

In the embodiment, the structure of the main body 110 is further defined. The main body 110 further comprises the air intake cavity 123, and the air intake cavity 123 is located between the first air duct 161, the second air duct 162 and the air inlets 171, one end of the air intake cavity 123 communicates with the multiple air inlets 171 and the other end communicates with the multiple air ducts 160, therefore, the air flow can be first buffered in the air intake cavity 123 after entering the door assembly 100 through the air inlets 171, then is divided into the first air duct 161 and the second air duct 162, and the air flow can flow more stably.

In some embodiments, as shown in FIG. 2 and FIG. 3, the door assembly 100 further comprises: a door seal 180 connected to the middle frame assembly 120, and the door seal 180 is located at the side of the middle frame assembly 120 facing the cooking cavity, and is provided with an avoiding opening 181; and a sealing member 182 provided at the avoiding opening 181 and attached to the inner wall of the avoiding opening 181, and at least a portion of the middle frame assembly 120 extends into the avoiding opening 181, and at least a portion of the sealing member 182 is provided between the inner wall of the avoiding opening 181 and the middle frame assembly 120.

In the embodiment, the structure of the door assembly 100 is further defined, the door assembly 100 further comprises the door seal 180, the door seal 180 is configured to cooperate with the box body of the cooking appliance, when the door assembly 100 closes the cooking cavity, the door seal 180 is closely attached to the box body of the cooking appliance, and the door assembly 100 can seal the cooking cavity tightly. The door seal 180 is connected to the middle frame assembly 120, the door seal 180 can be connected to the middle frame assembly 120 through a screw, and can further be connected to the middle frame assembly 120 through other connecting methods. The door seal 180 is located at the side of the middle frame assembly 120 facing the cooking cavity.

Furthermore, the door assembly 100 is further provided with the avoiding opening 181, the portion of the middle frame assembly 120 provided with the heat insulating plate 122 extends into the avoiding opening 181, when the door assembly 100 closes the cooking cavity, the heat insulating plate 122 faces the cooking cavity to insulate the high temperature in the cooking cavity.

Furthermore, the door assembly 100 further comprises the sealing member 182, the sealing member 182 is configured to be a sealing ring structure having the same shape with the avoiding opening 181, the sealing member 182 is provided at the avoiding opening 181 and attached to the inner wall of the avoiding opening 181, at least a portion of the sealing member 182 is located between the inner wall of the avoiding opening 181 and the middle frame assembly 120 extending into the avoiding opening 181, the sealing member 182 is pressed by the middle frame assembly 120 and the inner wall of the avoiding opening 181, to achieve a sealing function, prevent the moisture in the cooking cavity from penetrating into the door assembly 100 via the gap between the middle frame assembly 120 and the inner wall of the avoiding opening 181, and thus achieve a certain protecting function to the door assembly 100.

In some embodiments, as shown in FIG. 1, FIG. 2 and FIG. 3, the door assembly 100 further comprises multiple connecting members 190 which are respectively connected to the two sides of the mounting frame 130, and the connecting members 190 are configured to connect the door assembly 100 to the box body of the cooking appliance.

In the embodiment, the structure of the door assembly 100 is further defined. In order that the door assembly 100 can be mounted on the box body of the cooking appliance, the present disclosure further provides multiple connecting members 190 in the door assembly 100, and the connecting members 190 are configured to connect the door assembly 100 to the box body of the cooking appliance. The multiple connecting members 190 are respectively connected to the two sides of the mounting frame 130, the connecting members 190 are connected to the mounting frame 130 through a screw, at least a portion of the connecting members 190 extend out of the door assembly 100 and are inserted into the connecting holes of the cooking appliance matching the connecting members 190, and the door assembly 100 can be connected to the box body of the cooking appliance.

In some embodiments, as shown in FIG. 3, each of the connecting members 190 comprises: a first connecting rod 191 connected to the mounting frame 130; a second connecting rod 192 connected to the box body, and the first connecting rod 191 can rotate with respect to the second connecting rod 192, and so that the door assembly 100 can rotate with respect to the box body.

In the embodiment, the structure of the connecting member 190 is defined. Each of the connecting members 190 comprises the first connecting rod 191 and the second connecting rod 192, and the first connecting rod 191 is connected to the mounting frame 130, the second connecting rod 192 is connected to the box body of the cooking appliance, and the first connecting rod 191 can rotate with respect to the second connecting rod 192, i.e., the first connecting rod 191 is hinged to the second connecting rod 192. In the case that the user needs to open the door assembly 100, the door assembly 100 can be pulled by the user to rotate towards the direction away from the box body of the cooking appliance, at this moment, the first connecting rod 191 rotates with respect to the second connecting rod 192, and the door assembly 100 can open the cooking cavity, when the user needs to close the cooking cavity, the door assembly 100 is pushed by the user to rotate towards the direction facing the box body of the cooking appliance, at this moment, the first connecting rod 191 rotates with respect to the second connecting rod 192, and the door assembly 100 can close the cooking cavity.

In a possible embodiment, the present disclosure provides a door assembly 100 with the air duct160, and the door assembly 100 provided by the present disclosure can be applied to a cooking appliance which has a microwave steaming and baking function and a self-cleaning function, and the door assembly 100 has multiple layers of glass and an inner air duct, and further has a horizontal air duct.

As shown in FIG. 2 and FIG. 3, air is blown into the air passage (i.e., the heat dissipation cavity of the cooking appliance) in the front plate of the cavity body, and the air enters through the upper cover 170 of the door assembly 100 and flows into the second air duct 162 composed by a second layer of heat insulation glass (i.e., the second partition plate 152)(from the left to the right) and a third layer of heat insulation glass (i.e., the first partition plate 151) through ventilation grids (i.e., the air inlets 171), and meanwhile flows into the first air duct 161 composed by the third layer of heat insulation glass and the inner wall of the middle frame assembly 120, and finally flows out from the lower end of the door assembly 100.

The overall assembling method of the door assembly 100 is as follows: the circumference of a furnace door sealing ring (i.e., the sealing member 182) is fixed to the door seal 180; the door seal 180 is fixed to the middle frame assembly 120 through a screw; the third layer of heat insulation glass is fixed to the middle assembly 120; the main frame (i.e., the mounting frame 130) is fixed to the middle frame assembly 120 and compressed to the third layer of heat insulation glass tightly; the main frame is fixed to the middle frame assembly 120 through a screw; the bottom of the third layer of heat insulation glass is inserted into the main frame, the upper end is fixed to the main frame through a bilaterally symmetrical sheet (i.e., the limiting member 134), and the left end hinge and the right end hinge (i.e., the connecting member 190) are fixed to the lower end of the main frame; and a glass assembly (i.e., the outer door plate 140) is hooked on the main frame in the manner of a hook.

The second aspect of the present disclosure further provides a cooking appliance, including: the door assembly 100 provided in the first aspect of the present disclosure; a box body including a cooking cavity, and the door assembly 100 is used for opening or closing the cooking cavity; a heat dissipation cavity communicating with the air inlets 171 of the door assembly 100; a heat dissipating device provided in the heat dissipation cavity, and the heat dissipating device can form an air flow for heat dissipation, and discharge the air flow into the air ducts 160 of the door assembly 100 through the air inlets 171.

The cooking appliance provided in the present disclosure comprises the box body and the door assembly 100, the box body comprises the cooking cavity, and the door assembly 100 is connected to the box body and can move between different positions with respect to the box body, and the door assembly 100 can open or close the cooking cavity.

Furthermore, the cooking appliance further comprises the heat dissipation cavity, and the heat dissipation cavity is provided with the heat dissipating device therein, and the heat dissipating device comprises a fan. The heat dissipating device can form an air flow for heat dissipation when it operates, the heat dissipation cavity communicates with the air inlets 171 of the door assembly 100, the air flow enters the door assembly 100 through the air inlets 171, the door assembly 100 comprises multiple air ducts 160 communicating with the outside, and the air flow moves along the air ducts 160 and is discharged to the outside, to achieve the function of lowering the temperature of the door assembly 100.

The cooking appliance provided in the second aspect of the present disclosure comprises the door assembly 100 provided in the first aspect of the present disclosure, and thus has all the advantageous effects of the door assembly 100.

The cooking appliance can be an oven or a microwave steaming and baking integrated machine.

In the specification of the present disclosure, the term of "multiple" indicates two or more, unless otherwise explicitly specified or defined; the terms of "mount", "connected to", "connect with", "fixing" and the like should be understood in a broad sense, for example, the term "connected to" may be a fixed connection, and may further be a removable connection, or an integral connection; and the term of "connect with" may be a direct connection and may further be an indirect connection through an intermediate medium. A person of ordinary skills in the art could understand the specific meanings of the terms in the present disclosure according to specific situations.

In the description of the present specification, the descriptions of the phrases "one embodiment", "some embodiments" and "specific embodiments" and the like mean that the specific features, structures, materials or characteristics described in combination with the embodiment(s) or example(s) are included in at least one embodiment or example of the present disclosure. In the specification, the schematic representation of the above phrases does not necessarily refer to the same embodiment or example. Moreover, the particular features, structures, materials or characteristics described may be combined in a suitable manner in any one or more of the embodiments or examples.

The descriptions above are only some embodiments of the present disclosure, and are not configured to limit the present disclosure. For a person skilled in the art, the present disclosure may have various changes and variations. Any modifications, equivalent substitutions, improvements, etc. made within the spirit and principle of the present disclosure shall all be included in the protection scope of the present disclosure.

## Claims

1. A door assembly for a cooking appliance, comprising:
a main body;
multiple partition plates, located within the main body and connected to the main body sequentially along a direction away from a cooking cavity of the cooking appliance;
wherein, multiple air ducts are enclosed between any two adjacent partition plates and between the inner wall of the main body close to the cooking cavity and an adjacent partition plate, one end of any air duct communicates with outside and an other end communicates with a heat dissipation cavity of the cooking appliance, and the air ducts are configured to discharge the air flow in the heat dissipation cavity, to cool down the door assembly.

2. The door assembly according to claim 1, wherein, the main body comprises:
a middle frame assembly;
a mounting frame connected to the middle frame assembly, wherein the mounting frame is located at a side of the middle frame assembly away from the cooking cavity, and the multiple partition plates are respectively located at two sides of the mounting frame.

3. The door assembly according to claim 2, wherein, the multiple partition plates comprise:
a first partition plate, located between the mounting frame and the middle frame assembly, wherein the first partition plate is connected to the middle frame assembly, and the first partition plate and the middle frame assembly define a first air duct of the multiple air ducts; and
a second partition plate, located at a side of the mounting frame away from the middle frame assembly, wherein the second partition plate is connected to the mounting frame, and the second partition plate and the first partition plate define a second air duct of the multiple air ducts.

4. The door assembly according to claim 3, further comprising:
a baffle connected to a side of the mounting frame facing the middle frame assembly, wherein, the baffle is configured to support the first partition plate;
the baffle is provided with multiple air outlets, the air outlets are located between the first partition plate and the second partition plate, and the second air duct communicates with the outside through the air outlets.

5. The door assembly according to claim 4, wherein,
the baffle and the middle frame assembly enclose multiple air discharge grooves, the air discharge grooves are located between the first partition plate and the middle frame assembly, and the first air duct communicates with the outside through the air discharge grooves.

6. The door assembly according to claim 3, wherein, the mounting frame comprises:
a mounting groove, with the second partition plate inserted into the mounting groove.

7. The door assembly according to claim 3, further comprising:
at least one limiting member connected to the mounting frame, with the limiting member located at the side of the mounting frame away from the middle frame assembly, wherein at least a portion of the second partition plate is located between the limiting member and the mounting frame, and the limiting member is configured to limit the second partition plate.

8. The door assembly according to claim 3, wherein, the main body further comprises:
an outer door plate connected to the mounting frame, the outer door plate is provided at a side of the second partition plate away from the first partition plate, and a decoration plate is provided at a side of the outer door plate facing the outside.

9. The door assembly according to claim 8, wherein, the middle frame assembly comprises:
a middle frame; and
a heat insulating plate mounted on the middle frame;
wherein the first partition plate, the second partition plate, the heat insulating plate and the decoration plate are made of a high temperature resistant glass.

10. The door assembly according to any one of claims 1 to 9, further comprising:
an upper cover connected to the main body, wherein the upper cover is provided with multiple air inlets, and the air inlets communicate with the multiple air ducts.

11. The door assembly according to any one of claims 2 to 9, further comprising:
a door seal connected to the middle frame assembly, wherein the door seal is located at a side of the middle frame assembly facing the cooking cavity, and is provided with an avoiding opening; and
a sealing member provided at the avoiding opening and attached to an inner wall of the avoiding opening, wherein at least a portion of the middle frame assembly extends into the avoiding opening, and at least a portion of the sealing member is provided between the inner wall of the avoiding opening and the middle frame assembly.

12. The door assembly according to any one of claims 2 to 9, further comprising:
multiple connecting members which are respectively connected to the two sides of the mounting frame, wherein, the connecting members are configured to connect the door assembly to a box body of the cooking appliance.

13. The door assembly according to claim 12, wherein, each of the connecting members comprises:
a first connecting rod connected to the mounting frame;
a second connecting rod connected to the box body, wherein, the first connecting rod is able to rotate with respect to the second connecting rod, so that the door assembly is able to rotate with respect to the box body.

14. A cooking appliance, comprising:
a door assembly according to any one of claims 1 to 13;
a box body comprising a cooking cavity, wherein the door assembly is used for opening or closing the cooking cavity;
a heat dissipation cavity communicating with the air inlets of the door assembly;
a heat dissipating device provided in the heat dissipation cavity, wherein the heat dissipating device is able to form an air flow for heat dissipation, and discharge the air flow into an air duct of the door assembly through the air inlet.

15. The cooking appliance according to claim 14, wherein,
the cooking appliance is an oven or a microwave steaming and baking integrated machine.
